# EUROPEAN PATENT APPLICATION

(11) **EP 1 447 258 A1**
(43) Date of publication of application: **18.08.2004**
(21) Application number: 02770264.6
(22) Date of filing: 24.10.2002
(51) Int. Cl.: B60K 35/00, G02F 1/13

(54) **DISPLAY DEVICE FOR VEHICLE**

(30) Priority: 31.10.2001 JP 2001333613
(71) Applicant: NIPPON SEIKI CO., LTD., Nagaoka-shi, Niigata 940-8580 (JP)
(72) Inventor: MARUYAMA, Yousuke, Nippon seiki Co. Ltd R&D Ctr., Nagaoka-shi, Niigata 940-2141 (JP); KOJIMA, Tetsuaki, Nippon seiki Co. Ltd R&D Ctr., Nagaoka-shi, Niigata 940-2141 (JP); HAYAKAWA, Naoaki, Nippon seiki Co. Ltd R&D Ctr., Nagaoka-shi, Niigata 940-2141 (JP)
(74) Representative: Jackson, Richard Eric
(86) International application number: PCT/JP2002/011069
(87) International publication number: WO 2003/037671

(57) **Abstract**

A display device (head-up display) (1) for vehide capable of displaying specified information for the driver (C) of a vehicle (A) by reflecting specified display light emitted from a display device (2) by a reflecting member (3), comprising the display device (2) having a liquid crystal display panel (9), an illumination means (5) disposed an the rear side of the liquid crystal display panel (9) for radiating illumination light, a semi-transmitting reflecting plate (semi-transmitting reflecting member) (8) disposed between the liquid crystal display panel (9) and the illumination means (5), and a louver (7) disposed between the semi-transmitting reflecting member (8) and the illumination means (5).

## Description

### Technical Field

The present invention relates to a vehicular display device for displaying various pieces of information for the driver of a vehicle by reflecting a predetermined display light emitted from a display device, on a reflecting member.

### Background Art

As a display device for a vehicle such as an automobile, there has been known in the prior art a headup display for projecting drive information on the windshield so that the drive information may be recognized without deteriorating the front visibility. In this headup display of the known construction, the display light, as emitted from a display device disposed in the instrument panel (a liquid crystal display panel is projected toward the driver through either a thin-film combiner (e.g., a semitransparent reflecting film) formed on the face of the windshield or a thin-film combiner formed on a dedicated transparent plate, so that the driver recognizes a virtual display image (e.g., the vehicular drive information) when looking forward through the combiner.

The display device to be used as such vehicular display device is exemplified by the so-called "transparent type liquid crystal display device, in which illumination means such as a lamp or a cold cathode tube (CCT) is arranged at the back of the liquid crystal display panel to illuminate the liquid crystal display panel so that the combiner is irradiated with the display light coming from the liquid crystal display panel.

In JP-A-5-178121, on the other hand, the Applicant has proposed a vehicular display device, which is provided with a semitransparent reflecting type liquid crystal display device for utilizing the surrounding light in case the surroundings are bright as in the daytime and illumination means in case the surroundings are dark as at night. This vehicular display device is provided with a segment display type liquid crystal display panel. In order to prevent the false-lighting of the liquid crystal display panel due to the shining of the surrounding light, the vehicular display device is constructed to have a louver arranged on the front side of the liquid crystal display panel for allowing entry of only the surrounding light in one direction, so that the surrounding light entering in that direction in case the surroundings are bright may be reflected as the display light on the combiner through the semitransparent reflecting plate, thereby to cause the driver to recognize the drive information of the vehicle.

The vehicular display device having such a semitransparent reflecting type liquid crystal display device is constructed such that the louver is disposed on the front side of the display device to allow the entry of only the surrounding light in one direction into the display device. Therefore, the vehicular display device has a problem that a satisfactory display light cannot be obtained due to shortage of the incidence of the surrounding light especially in cloudy daytime weather.

The present invention relates to an improvement in the headup display (or the vehicular display device) provided with the semitransparent reflecting type display device, and has an object to provide a vehicular display device which can obtain a satisfactory display light from the display device even in cloudy daytime weather.

### Disclosure of the Invention

According to the present invention, there is provided a vehicular display device for displaying information for a vehicular driver by reflecting a display light emitted from a display device on a reflecting member provided in the display device, wherein the improvement resides in that the display device comprises: a dot matrix type liquid crystal displaypanel; illumination means arranged on the back of the liquid crystal display panel for producing the display light; and a semitransparent reflecting member arranged between the liquid crystal display panel and the illumination means or belonging to the liquid crystal display panel for allowing the light emitted from the illumination means to pass and reflecting the surrounding light. The liquid crystal display panel is reflectively illuminated with the surrounding light in case the surroundings are bright and illuminated with the illumination means through the semitransparent reflecting member in case the surroundings are dark, so that the reflecting member can be irradiated with the display light to allow recognition of the various pieces of information.

There is further provided a vehicular display device for displaying information for a vehicular driver by reflecting a display light, as emitted from a display device, on a reflecting member, wherein the improvement resides in that the display device comprises: a liquid crystal display panel; illumination means arranged on the back of the liquid crystal display panel for producing the display light; a semitransparent reflecting member arranged between the liquid crystal display panel and the illumination means or belonging to the liquid crystal display panel for allowing the light emitted from the illumination means to pass and for reflecting the surrounding light; and a louver arranged between the semitransparent reflecting member and the illumination means. The liquid crystal display panel is reflectively illuminated with the surrounding light in case the surroundings are bright and illuminated through the semitransparent reflecting member with the illumination means in case the surroundings are dark, so that the reflecting member can be irradiated with the display light to allow recognition of the various pieces of information. In the construction, moreover, the louver is not disposed on the front face of the display device unlike the prior art. Especially in cloudy daytime weather, therefore, a sufficient incidence of the surrounding light on the display device can be retained to sufficiently acquire the display light emitted from the display device.

There is further provided a vehicular display device for displaying information for a vehicular driver by reflecting a display light emitted from a display device on a reflecting member provided in the display device, wherein the improvement resides in that the display device comprises: a liquid crystal display panel; illumination means arranged on the back of the liquid crystal display panel for producing the display light; a semitransparent reflecting member arranged between the liquid crystal display panel and the illumination means or belonging to the liquid crystal display panel for allowing the light emitted from the illumination means to pass and for reflecting the surrounding light; and a louver arranged between the semitransparent reflecting member and the illumination means and having an angle for irradiating the reflecting member with the display light. The liquid crystal display panel is reflectively illuminated with the surrounding light in case the surroundings are bright and illuminated through the reflecting member with the illumination means in case the surroundings are dark, so that the reflecting member can be irradiated with the display light to allow recognition of the various pieces of information. In the construction, moreover, the louver is not disposed on the front face of the display device unlike the prior art. Especially in cloudy daytime weather, therefore, a sufficient incidence of the surrounding light on the display device can be retained to sufficiently acquire the display light emitted from the display device. Also, the reflecting member can be exclusively irradiated with the display light, which is obtained when the liquid crystal display panel is illuminated through the reflecting member by the illumination means. Therefore, it is possible to prevent the display light other than that from the reflecting member from being reflected on the windshield of the vehicle.

### Brief Description of the Drawings

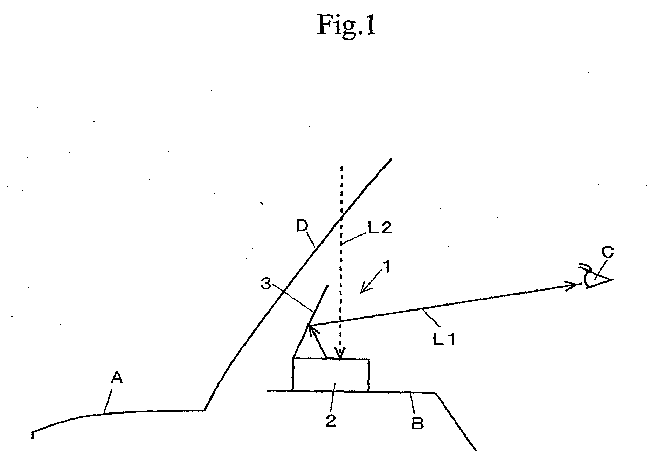

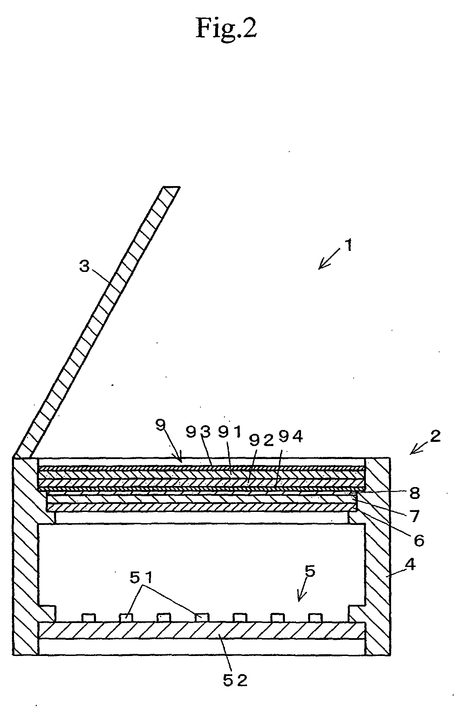

Fig. 1 is an overall construction diagram showing a headup display of the present embodiment, and Fig. 2 is a diagram showing a display device of the headup display of the present embodiment.

### Best Mode for Carrying Out the Invention

A mode of embodiment of the present invention will be described with reference to the accompanying drawings.

In Fig. 1 and Fig. 2, a headup display 1 or a vehicular display device is provided with a display device 2 and a reflecting member 3.

The display device 2 is constructed by arranging illumination means 5, a light diffusing plate 6, a louver 7, a semitransparent reflecting plate (or a semitransparent reflecting member) 8 and a liquid crystal display panel 9 sequentially from the lower end portion of a case body 4, which is made of a refractory resin material.

The illumination means 5 is made by packaging a plurality of light emitting diodes 51 for emitting a white light, for example, on a hard wiring board 52 arranged in the lower end portion of the case body 8.

The light diffusing plate 6 is interposed between the illumination means 5 and the louver 7 and is so arranged at a rather higher position than the middle portion of the case body 8 as is spaced at a predetermined distance from the illumination means 5. The light diffusing plate 6 diffuses the light emitted from the illumination means 5.

The louver 7 is interposed between the light diffusing plate 6 and the semitransparent reflecting plate 8 so as to be held in close contact with the two members 6 and 8. The louver 7 orients the light emitted from the illumination means 5, in one direction to irradiate the liquid crystal display panel 9. The louver 7 is made of View Control Film, which is known under the trade name of Shinetsu Polymer KK to have a louver angle of 18 degrees and a visible angle of 60 degrees. The louver 7 irradiates the reflecting member 3 with a display light L1, which is obtained on the liquid crystal display panel 9 on the basis of the illuminating light emitted from the illumination means 5.

The semitransparent reflecting plate 8 is interposed between the louver 7 and the liquid crystal display panel 9 so as to be held in close contact with the back of the liquid crystal display panel 9. The semitransparent reflecting plate 8 is prepared by forming a semitransparent reflecting film on a transparent substrate. The semitransparent reflecting plate 8 used has a reflectivity of 30 % to 50 % to reflect a surrounding light L2 incident on the display device 2.

The liquid crystal display panel 9 is constructed by filling a liquid crystal between apair of transparent substrates (e.g., glass substrates) 91 and 92 having the (not-shown) transparent electrodes of an indium tin oxide (ITO) such that the individual transparent electrodes are formed into orthogonal stripes to provide pixels at the portions where individual transparent electrodes of two orthogonal stripes intersect each other. With this construction, the liquid crystal display panel 9 is called the "dot matrix type liquid crystal display panel". Moreover, polarizing plates 93 and 94 are adhered to the surface and back of the transparent substrates 91 and 92, respectively. On the basis of drive signals coming from the not-shown control circuit, the liquid crystal display panel 9 displays various pieces of information such as the running information of a vehicle A, e. g. , the vehicle speed or the engine speed, or the information of the Vehicle Information and Communication System (VICS).

The display device 2 is constructed of the individual portions thus far described and is arranged over the instrument panel B of the vehicle A.

The reflecting member 3 is a combiner having a semitransparent film formed on a transparent plate, and is mounted on the display device 2 at an inclination toward a driver C. The reflecting member 3 enables the driver C to recognize those various pieces of information by reflecting this information carried in the display light L1 emitted from the display device 2, toward the driver C.

Here will be described the actions of the display device 2 in the embodiment of the present invention. In case the surroundings are bright (in the daytime, for example), the display device 2 catches the surrounding light L2, and as the display light L1 carrying the display information in the display device 2, this light L2 is reflected by the semitransparent reflecting plate 8 to irradiate the reflecting member 3. Here, the liquid crystal display panel 9 is of the dot matrix type so that it does not cause false lighting of the liquid crystal display, as occurs in the segment display type liquid crystal display panel, even if surrounding light L2 enters the display device 2.

In case the surroundings are dark (at night, for example) , the display device 2 causes the illuminating light emitted from the illumination means 5 to enter the liquid crystal display panel 9 through the light diffusing plate 6, the louver 7 and the semitransparent reflecting plate 8, thereby to obtain the display light L1. In the display device 2, therefore, the illuminating light from the illumination means 5 is converted into an illuminating light of a unidirectional component by the louver 7 and is brought into the liquid crystal display panel 9. Thus, the display light L1 emitted from the liquid crystal display panel 9 is directed toward the reflecting member 3 so that the display light L1 can be prevented from being reflected (or projected) on the windshield D of the vehicle A at a place other than the reflecting member 3.

The headup display 1 thus far described comprises the display device 2, which includes: the dot matrix type liquid crystal display panel 9; the illumination means 5 arranged on the back of the liquid crystal display panel 9 for illuminating through the liquid crystal display panel 9; and the semitransparent reflecting plate 8 arranged between the liquid crystal display panel 9 and the illumination means 5, for allowing the illuminating light emitted from the illumination means 5 to pass and for reflecting the surrounding light L2, thereby to obtain the display light L1. In recent years, because of the desire for a display device capable of displaying various pieces of information, the dot matrix type liquid crystal display panel 9 is reflectively illuminated with the surrounding light L2, in case the surroundings are bright, and illuminated through the semitransparent reflecting plate with the illumination means 5, in case the surroundings are dark. Therefore, the display light L1 can be projected on the reflecting member 3 to allow the driver C of the vehicle A to recognize various pieces of information. Moreover, the construction having no louver on the front side of the display device is adopted unlike the prior art by arranging the louver 7 between the semitransparent reflecting plate 8 and the illumination means 5. Especially even in the cloudy daytime, therefore, the surrounding light on the display device 2 can be sufficiently retained so that the display light L1 emitted from the display device 2 can be satisfactorily obtained.

Moreover, the louver 7 has the louver angle for projecting the display light L1 toward the reflecting member 3. Therefore, the display light L1 obtained when the illumination means 5 illuminates through the liquid crystal display panel 9 can illuminate the reflecting member 3 exclusively. As a result, the display light L1 can be prevented from being reflected on the windshield D of the vehicle A other than the reflecting member 3.

Unlike the case in which the display light is obtained merely by illuminating through the dot matrix type liquid crystal display panel, moreover, the display device can dispense with a light source capable of emitting an intense light or a large number of light sources. Therefore, the display device can itself be small-sized and consumes less electric power so that it can lighten the load on the battery mounted on the vehicle. Moreover, the display device itself can be made compact to lower the cost for the vehicular display device.

If the louver is arranged on the front side of the liquid crystal display panel as in the prior art, moreover, the surrounding light coming into the liquid crystal display panel is lessened, so that the display light from the liquid crystal display panel is insufficient. By arranging the louver 7 between the semitransparent reflecting plate 8 and the illumination means 5, as described above, however, the surrounding light L2 can be sufficiently introduced into the display device 2 so that the display light L1 sufficient for the reliable recognition of information through the reflecting member 3 by the driver C can be obtained.

The reflecting member 3 is disposed in the display device 2 in an inclined state having a predetermined angle, that is, at the inclination toward the driver C so that the driver C can easily recognize the various pieces of information displayed by the reflecting member 3.

In the aforementioned embodiment, the semitransparent reflecting plate 8 is made separate from the liquid crystal display panel 9. In the present invention, however, the semitransparent reflection type display device may be obtained by forming the semitransparent reflecting film in the liquid crystal display panel.

Moreover, the aforementioned embodiment is provided with the light emitting diodes 51 as the illumination means 5 of the display device 2. However, the illumination means in the present invention may also be composed of electroluminescence diodes (ELD) or a cold cathode tube (CCT).

In the aforementioned embodiment, moreover, the reflecting member 3 is constructed of the semitransparent reflection type combiner. However, the reflecting member in the present invention may also be a reflecting plate that merely reflects the display light L1.

In the aforementioned embodiment, moreover, the display device 2 is constructed to include a dedicated reflecting member 3 for reflecting the display light L1. However, the reflecting member of the present invention may be constructed to include a thin-film combiner on the face of the windshield D. In this case, the driver C can recognize the display information in a display image when looking forward through the combiner.

### Industrial Applicability

As has been described hereinbefore, the vehicular display device according to the present invention is effective especially for the display device for reflecting a predetermined display light emitted from a display device by means of a reflecting member, thereby to display various pieces of information for the driver of a vehicle.

## Claims

1. A vehicular display device for displaying information for a vehicular driver by reflecting a display light emitted from a display device on a reflecting member provided in said display device,
wherein the improvement resides in that said display device comprises: a dot matrix type liquid crystal displaypanel; illumination means arranged on the back of said liquid crystal display panel for producing said display light; and a semitransparent reflecting member arranged between said liquid crystal display panel and said illumination means or belonging to said liquid crystal display panel, for allowing the light emitted from said illumination means to pass and for reflecting the surrounding light.

2. A vehicular display device as set forth in Claim 1, wherein a louver is arranged between said semitransparent reflecting member and said illumination means.

3. A vehicular display device for displaying information for a vehicular driver by reflecting a display light emitted from a display device on a reflecting member,
wherein the improvement resides in that said display device comprises: a liquid crystal display panel; illumination means arranged on the back of said liquid crystal display panel for producing said display light; a semitransparent reflecting member arranged between said liquid crystal display panel and said illumination means or belonging to said liquid crystal display panel, for allowing the light emitted from said illumination means to pass and for reflecting the surrounding light; and a louver arranged between said semitransparent reflecting member and said illumination means.

4. A vehicular display device as set forth in Claim 3, wherein said reflecting member is disposed on said display device in an inclined state having a predetermined angle.

5. A vehicular display device as set forth in Claim 3 or 4, wherein said louver has a louver angle directed to said reflecting member and allow irradiating of said reflecting member with said display light.

6. A vehicular display device for displaying information for a vehicular driver by reflecting a display light emitted from a display device on a reflecting member contained in said display device
wherein the improvement resides in that said display device comprises: a liquid crystal display panel; illumination means arranged on the back of said liquid crystal display panel for producing said display light; a semitransparent reflecting member arranged between said liquid crystal display panel and said illumination means or belonging to said liquid crystal display panel, for allowing light emitted from said illumination means to pass and for reflecting the surrounding light; and a louver arranged between said semitransparent reflecting member and said illumination means and having an angle directed to said reflectingmember to allow irradiation of said reflecting member with said display light.
